# EUROPÄISCHE PATENTSCHRIFT

(11) **EP 2 217 514 B1**
(45) Veröffentlichungstag und Bekanntmachung des Hinweises auf die Patenterteilung: **17.02.2016**
(21) Anmeldenummer: 08857488.4
(22) Anmeldetag: 01.12.2008
(51) Int. Cl.: B65G 49/06

(54) **VORRICHTUNG UND VERFAHREN ZUM AUSLEITEN VON GLASPLATTEN IN EINER FERTIGUNGSLINIE**
APPARATUS AND METHOD FOR DIVERTING GLASS PLATES IN A PRODUCTION LINE
DISPOSITIF ET PROCÉDÉ POUR ÉLIMINER PAR DÉVIATION DES PLAQUES EN VERRE DANS UNE LIGNE DE FABRICATION

(30) Priorität: 06.12.2007 DE 102007058786
(43) Veröffentlichungstag der Anmeldung: 18.08.2010
(73) Patentinhaber: Grenzebach Maschinenbau GmbH, 86663 Asbach-Bäumenheim/Hamlar (DE)
(72) Erfinder: STRASS, Manfred, 86655 Harburg (DE)
(74) Vertreter: Kindermann, Peter
(86) Internationale Anmeldenummer: PCT/DE2008/002002
(87) Internationale Veröffentlichungsnummer: WO 2009/071061

(56) Entgegenhaltungen:
- EP-A- 0 059 984
- WO-A-2007/051582
- DE-A1- 10 053 852
- US-A- 3 279 664
- US-A- 4 016 969
- US-A- 4 076 159
- US-A- 5 104 523

## Beschreibung

Die Herstellung von Floatglas erfolgt durch das fortlaufende Ausgießen der Glasschmelze auf einem in einer länglichen Wanne erhitzten Zinnbad und das sich hieraus ergebende Glasband.

Das anschließende Konfektionieren von Floatglas geschieht durch Längsschneiden und Querschneiden des aus der Floatglasfertigung mit einer bestimmten Vorschubgeschwindigkeit laufenden Glasbandes. Das Längsschneiden bewirken hierbei in entsprechender Position über dem Glasband stationär installierte Längsschneidräder und das Querschneiden erfolgt mit Hilfe von Schneidbrücken und daran quer über das Glasband bewegten Querschneidrädern.

Bei der Herstellung von Glasscheiben im Floatglas - Verfahren ist eine vollständige Vermeidung von Partikeleinschlüssen bzw. Verunreinigungen im Glas zwar technisch denkbar, aber mit wirtschaftlich annehmbaren Maßnahmen kaum möglich. Es ist deswegen nicht verwunderlich, dass zum Beispiel in Flachgläsern Verunreinigungen als Begleiter des Glases anzutreffen sind und in der Glasmatrix Einschlüsse vorliegen. Unter diesen Einschlüssen sind insbesondere Nickelsulfideinschlüsse und Einschlüsse aus feuerfesten Materialien hervorzuheben, die zumeist den größten Anteil dieser Verunreinigungen ausmachen und die oftmals mit einer Größe bis zu etwa 600 Mikrometer vorliegen können.

Einschlüsse bzw. Partikel aus Nickelsulfiden oder feuerfesten Materialien im Sub - Millimeter - Bereich werden vom menschlichen Auge nicht wahrgenommen und beeinflussen ein ästhetisches Erscheinungsbild von Glasscheiben oder dergleichen Produkten daher nicht. Allerdings stellen solche Einschlüsse Fremdkörper dar, die im Vergleich mit Glas unterschiedliche Materialeigenschaften aufweisen und deshalb unter Umständen, zum Beispiel nach einem Härtevorgang, zu einem spontanen Bruch des Glases führen können. Solche Spontanbrüche, wie sie unter anderem bei Fassadenverkleidungen beobachtet werden, können erheblichen Personenschaden und Sachschaden nach sich ziehen. Man ist daher bemüht, mit geeigneten Verfahren bereits vor einer weiteren Verwendung Informationen über mögliche Einschlüsse zu erhalten, um entsprechende Glasanteile rechtzeitig ausscheiden zu können.

Zum Nachweis von Einschlüssen in Flachglas wurden schon optische Untersuchungsmethoden vorgeschlagen, die im Wesentlichen auf der Streuung von Laserlicht im amorphen Glas und der Analyse des gestreuten Lichts beruhen.

Hierdurch können Einschlüsse im Allgemeinen recht zuverlässig nachgewiesen werden, jedoch ist es nachteilig, dass diese Methode stets Laserlicht und damit einen relativ großen apparativen Aufwand verursacht. Zudem ist der nutzbare Querschnitt eines Laserstrahls begrenzt und erfordert deshalb in Anbetracht der zu untersuchenden großen Glasflächen entweder den Einsatz mehrerer Laser oder einen erhöhten Zeitaufwand durch das selektive Untersuchen kleinerer Flächen.

Deshalb setzt sich das aus der WO 2007/051582 A1 bekannte Verfahren das Ziel in einfacher Weise und ohne eine externe Lichtquelle Partikel in einem Gegenstand aus Glas nachzuweisen.

Das dort beschriebene Verfahren beruht im Wesentlichen darauf, dass während der Erstarrung des flüssigen Glases auf Umgebungstemperatur vom Gegenstand aus Glas emittierte elektromagnetische Strahlung ortsauflösend aufgenommen wird und die so ermittelte ortsabhängige Detektion der Strahlung zur Ermittlung von Einschlüssen ausgewertet wird (vgl. Anspruch 1).

Hierzu wird der Gegenstand aus Glas gleichförmig bewegt und die Aufnahme emittierter Strahlung mit einem oder mehreren Liniendetektoren oder Flächendetektoren, wie einer CCD - Kamera oder einer CMOS - Kamera, durchgeführt. Die Belichtungszeit eines Flächendetektors wird hierbei an die Bewegungsgeschwindigkeit des Gegenstandes angepasst (vgl. Anspruch 4).

Die entdeckten Einschlüsse müssen im Folgenden gekennzeichnet und ausgeschnitten werden. Dieser Prozess sollte aus ersichtlichen Gründen möglichst wenig Verschnitt ergeben und schnell, ohne eine Störung des laufenden Produktionsprozesses erfolgen.

Aus der US-A-3 279 664 ist eine Vorrichtung zum Ausleiten einer unbrauchbaren Glasplatte mittels einer schiefen Ebene bekannt, wobei aufgrund des Drehpunktes auch der hintere Teil der auszuleitenden Glasplatte gestützt wird. Eine zusätzliche Kippvorrichtung hierzu ist dieser Druckschrift nicht zu entnehmen.

Für die aus der DE 10 2004 025 329 A1 zum Beispiel bekannte Herstellung von Autoscheiben fällt eine beträchtliche Menge Verschnitt an, wenn aus den konfektionierten rechteckigen Rohlingen die trapezähnlichen Autoglasscheiben ausgeschnitten werden.

Zur Reduzierung des Verschnitts soll zu diesem Zweck im Wesentlichen das Schnittmuster so gewählt werden, dass jeweils zwei um 180° relativ zueinander gedreht orientierte Glasplatten mit einer entsprechenden Schrägkante direkt aneinander stoßend und mit ihren parallelen Trapezkanten miteinander fluchtend in Gestalt eines Streifens quer über dem Floatglasband angeordnet sind und in Richtung des Floatglasbandes aufeinander folgende Glasplattenpaarstreifen unmittelbar aneinander grenzen. Hierbei sollen die schräg verlaufenden Trapezkanten mittels Längsschneideorganen und die parallelen Trapezkanten mittels Querschneideorganen geschnitten werden (vgl. hierzu Anspruch 1).

Auf welche Weise die von den Schneideorganen abgeschnittenen Glasanteile die einen Verschnitt darstellen von den Nutzflächen getrennt werden, ist aus der DE 10 2004 025 329 A1 nicht bekannt.

Aus der EP 1 475 356 B1 ist ein Verfahren zum Teilen von Glastafeln in Glas - Zuschnitte nach einem vorgegebenen Aufteilungsmuster bekannt, bei dem Glastafeln in wenigstens einem ersten Teilungsschritt nach einer Richtung (X - Schnitte) in Glastafel - Zuschnitte und diese dann in wenigstens einem zweiten Teilungsschritt nach einer zum ersten Teilungsschritt senkrecht stehenden Richtung (Y - Schnitte) in Glas - Zuschnitte geteilt werden.

Hierbei soll unter Schutz gestellt werden, dass die nach dem Teilen in X - Richtung erhaltenen Glastafel - Zuschnitte auf dem nach der ersten Trennstelle (A) vorgesehenen Tisch gemeinsam einer zweiten Trennstelle (B), an der die Glastafel - Zuschnitte längs der Y - Schnitte geteilt werden, zugeführt werden. Weiterhin sollen wenigstens zwei solcher durch Öffnen der X - Schnitte erhaltene, weiter zu teilende Glastafel - Zuschnitte gleichzeitig der weiteren Trennstelle (B) zugeführt werden und die nebeneinander der Trennstelle (B) für die Y - Schnitte zugeführten Glastafel - Zuschnitte gleichzeitig in Glas - Zuschnitte entlang der Y - Schnitte geteilt werden (vgl. Anspruch 1).

In der Vorrichtung zu Durchführung dieses Verfahrens werden im Wesentlichen verfahrbare Schlitten, die an den Glastafel - Zuschnitten festlegbar sind und entsprechende Sauger verwendet.

Zu dem eigentlichen Vorgang des Zuschnitts und des Abtrennens findet sich in dieser Schrift kein Hinweis.

Desgleichen findet sich in beiden Druckschriften kein Hinweis darauf, wie in einem kontinuierlich laufenden Fertigungsprozess, bei dem Glasplatten unterschiedlichen Formats zugeschnitten werden, offensichtliche Ausschuss - Glasplatten schnell und kostengünstig ausgeschieden werden. So kann es in der Praxis erforderlich sein Glasplatten im laufenden Fertigungsprozess auszuscheiden die einerseits wenige Zentimeter lang sind oder auch eine Länge von mehreren Metern aufweisen können.

Es ist daher die Aufgabe der vorliegenden Erfindung eine Vorrichtung und ein Verfahren zum schnellen und zuverlässigen Ausleiten von gekennzeichneten Glasplatten stark unterschiedlichen Formats und unterschiedlicher Dicke, insbesondere Glasplatten, zu ermöglichen, die in einem fortlaufenden Produktionsprozess eingesetzt werden können und kostengünstig in der Anschaffung und im Unterhalt sind. Zudem soll die Ausleitung großer Glasplatten möglichst wenig Platz beanspruchen.

Diese Aufgabe wird gelöst durch eine Vorrichtung nach Anspruch 1 bzw. einem Verfahren nach Anspruch 9.

Die erfindungsgemäße Ausleitvorrichtung wird im Folgenden näher beschrieben.

Es zeigen im Einzelnen:
- Fig.1:: eine Ausleitvorrichtung in einer perspektivischen Darstellung
- Fig.2:: eine Rollen - Reihe als Teil der Ausleitvorrichtung
- Fig.3:: eine Detail - Ansicht des Kipp - Mechanismus eines Rollenpaares
- Fig.4:: eine Detail - Zeichnung des erfindungsgemäßen Kipp-Mechanismus
- Fig.5:: den Ausleitvorgang im Schnitt

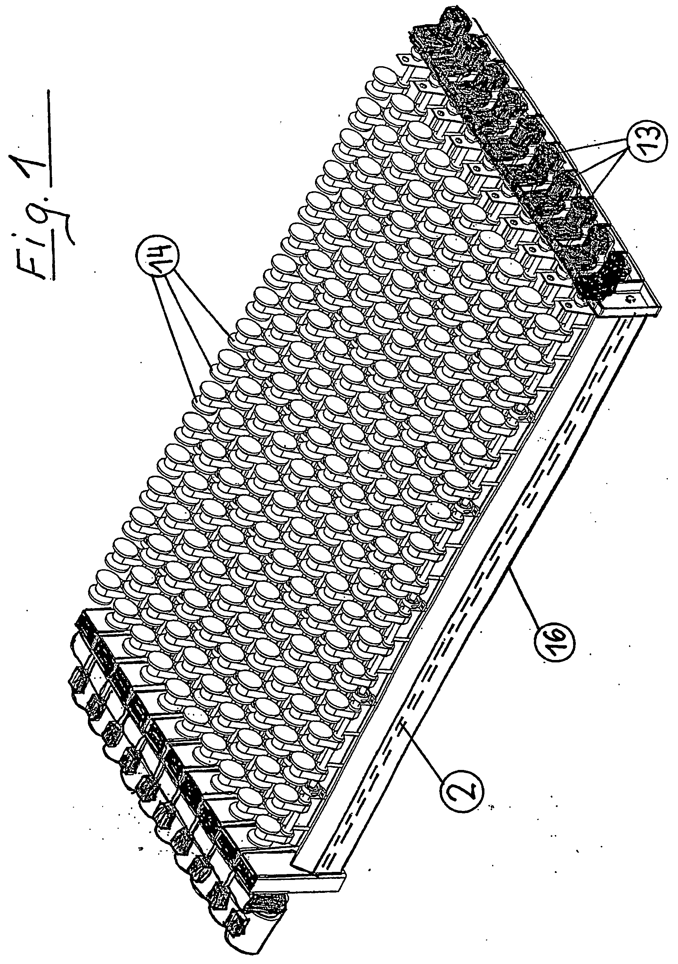

Die perspektivische Darstellung der Fig. 1 zeigt beispielhaft eine erfindungsgemäße Vorrichtung zum Ausleiten von Glasplatten. Eine solche Vorrichtung kann flächenmäßig unterschiedliche Größen aufweisen die sich nach der betreffenden Fertigungslinie und nach den Formaten der von der Fertigungslinie gelieferten Glasplatten richten.

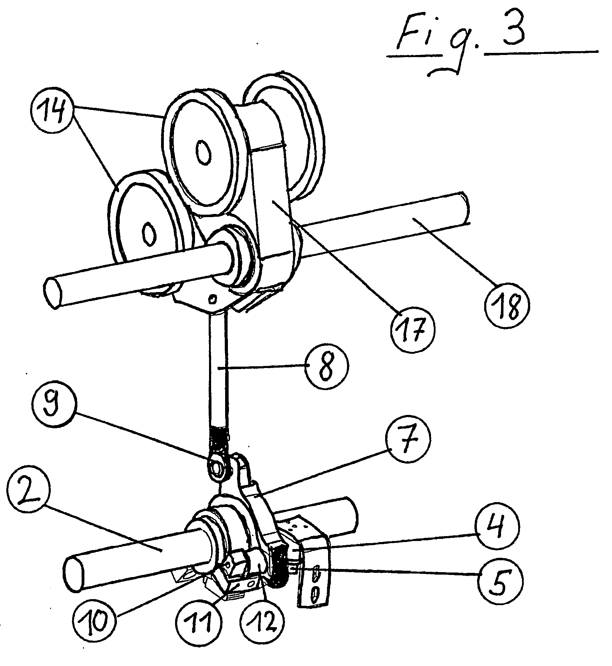

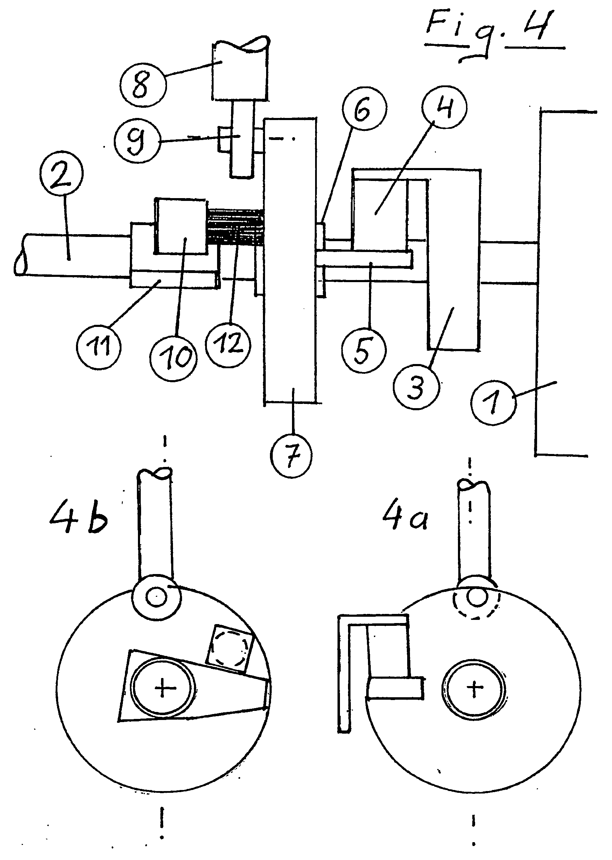

Eine solche Ausleitvorrichtung besteht aus einer Aneinanderreihung von linear angeordneten und in einem Gehäuse (16) zusammengefassten Rollenpaaren (14) die im Prinzip jeweils über die Drehung einer gemeinsamen Schaltwelle (2) abgekippt werden können. Eine selektive Ansteuerung eines jeden Rollenpaars (14) wird über einzeln zuschaltbare bzw. abschaltbare Elektromagnete (4) bewirkt wie sie im Detail der Figur 3 und in der technischen Schnittzeichnung der Fig.4 gezeigt werden.

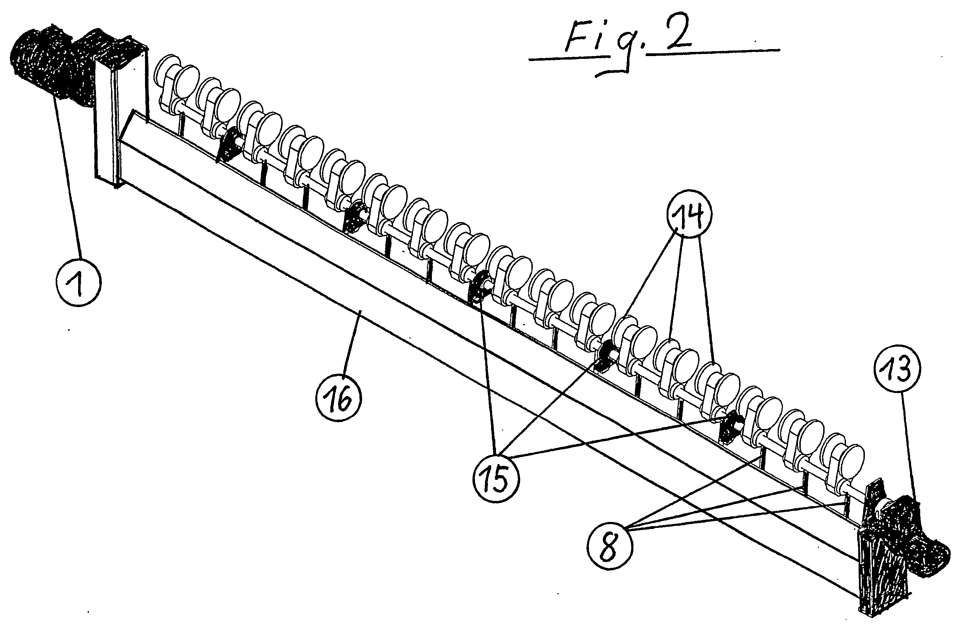

Die einzelnen Gehäuse (16), wie sie im Detail der Fig. 2 gezeichnet sind, sind so als Teil der gesamten Vorrichtung konzipiert, dass sie sogar während des Betriebs der Anlage, einzeln aus dem Verbund herausgenommen werden können und gewartet oder repariert werden können, ohne die Funktion der gesamtem Anlage zu gefährden

Jede Funktionseinheit (16) weist einen eigenen Rollenantrieb (13) auf, wie aus den Darstellungen der Figuren 1 und 2 zu erkennen ist. Die Kennzeichnungen für die Schaltwelle (2) und den Rollenantrieb (13) sind in der Fig. 1 lediglich beispielhaft dargestellt. Selbstverständlich verfügt jede Funktionseinheit über eine eigene Schaltwelle (2) und einen eigenen Rollenantrieb (13).

In der Fig. 2 ist zusätzlich der Servoantrieb (1) der Schaltwelle (2) der Rollenabsenkung gezeigt. Zur unterstützenden Zwischen - Lagerung der Rollenantriebsachse (18) dienen die fünf Lager (15). In der Fig. 2 sind die im Hintergrund befindlichen Kurbelstangen (8) zu erkennen.

Eine solche, modulartig aufgebaute, Funktionseinheit (16) ermöglicht nicht nur den Ausbau einer Einheit während des laufenden Betriebs, sondern auch den ungestörten Zugang zur Funktionseinheit für Wartungszwecke von unten.

In der Fig.3 nimmt in der perspektivischen Detail - Ansicht des Kippmechanismus des Laufrollenpaares (14) die Kurbelstange (8) dagegen eine zentrale Stellung ein. Denn sie dient der Kraftübertragung die von der Schaltwelle (2) auf den Kippmechanismus der Laufrollen (14) ausgeübt wird. Die Laufrollen (14) werden von der zentralen Rollenantriebsachse (18) über das Kippgetriebe (17) angetrieben. Das Kippgetriebe (17) dient dem Zweck beide Rollenpaare (14) in jeder Position gleichermaßen anzutreiben, das heißt sowohl in der Normalstellung, als auch in der gekippten Stellung.

Durch die konstruktive Ausgestaltung der Laufrollen jeweils als Rollenpaar (14) wird eine gleichmäßige Verteilung der Last der jeweiligen Glasplatte (19) auf die erfindungsgemäße Vorrichtung erreicht.

Aus der Fig.3 ist zudem die Lage des Elektromagneten (4) und der zugehörigen Ankerplatte (5), sowie die Lage des Dauermagneten (10) und seiner zugehörigen Ankerplatte (11), sowie die Kurbelscheibe (7) mit dem Kurbelscheibenlager (9) im Funktionszusammenhang zu erkennen. Es ist hierbei zu bemerken, dass eine, von der Schaltwelle (2) verursachte, Drehung der Kurbelscheibe (7) über das Kurbelstangenlager (9) auf die Kurbelstange (8) und damit auf das, mit dem Kurbelstangenlager (9) korrespondierende, Lager am Kippgetriebe (17) für den Rollenantrieb übertragen wird. Für das Kippgetriebe (17) ist aus Gründen der entfallenden Schmierung und der Langlebigkeit die Verwendung von Zahnrädern aus Kunststoff jeweils zwischen Zahnrädern aus Metall vorgesehen.

In der Fig.4 ist eine Detail - Zeichnung des Teils der erfindungsgemäßen Vorrichtung im Schnitt dargestellt der auf der Schaltwelle (2) funktionsmäßig unterhalb eines Laufrollenpaars (14) befestigt ist und, bei entsprechender elektrischer Ansteuerung, ein Abkippen dieses Rollenpaars (14) bewirkt.

Auf der rechten Seite der Schaltwelle (2) ist hier der Servoantrieb (1) im Schnitt gezeichnet. Der Elektromagnethalter (3) mit dem daran befestigten Elektromagneten (4) ist fest mit dem Gehäuse, bzw. der Funktionseinheit (16) verbunden und in der gezeigten Darstellung der Schaltwelle (2) vorgelagert.

Nach dem Servoantrieb (1) folgt auf der Schaltwelle (2) die Kurbelscheibe (7) mit dem Kurbelscheibenlager (6). Die Kurbelscheibe (7) trägt auf der rechten, dem Elektromagneten (4) zugewandten, Seite die zugehörige Ankerplatte (5) und auf der anderen, entgegengesetzten, Seite eine weitere Ankerplatte (11), die einem Permanentmagneten (10) zugeordnet ist. Der Permanentmagnet (10) ist über die zugehörige Halterung (12) mit der Schaltwelle (2) verbunden.

Weiter ist in der Fig.4 an der oberen Seite der Kurbelscheibe (7) das Kurbelstangenlager (9) mit der daran angelenkten Kurbelstange (8) dargestellt.

Zur näheren Funktionsbeschreibung des erfindungsgemäßen Schaltvorgangs ist in der Fig. 4a eine Darstellung mit Blick von der rechten Seite auf die oben gezeigte Kurbelscheibe (7) gegeben und in der Fig. 4b eine entsprechende Darstellung von der linken Seite her. In beiden Figuren 4a, als auch 4b, ist zu erkennen dass das Kurbelstangenlager (9) in der Ruheposition, die der normalen Lage der Laufrollenpaare (14) entspricht, nicht senkrecht über der Mittellinie der darunter liegenden Schaltwelle (2) positioniert ist, sondern etwas seitlich darüber. In dieser Ruheposition wird die Lage des Laufrollenpaars (14) im Wesentlichen durch das Anheften des Permanentmagneten (10) an der, mit der Kurbelscheibe (7) verbundenen, Ankerplatte (11) und die Verbindung des strombeaufschlagten Elektromagneten (4) mit der Ankerplatte (5) gehalten, denn die Kurbelscheibe (7) fixiert ihrerseits die Kurbelstange (8).

Wird nunmehr die Schaltwelle (2) zum Beispiel eine halbe Umdrehung, entsprechend der Fig. 4b, entgegen dem Uhrzeigersinn gedreht und gleichzeitig der Elektromagnet (4) ausgeschaltet, löst sich dieser von seiner Ankerplatte (5) und die Schaltwelle (2) überträgt diese Drehbewegung über die Halterung (12) zusammen mit der Ankerplatte (11) und den Permanentmagneten (10) auf die Kurbelscheibe (7). Die Kurbelscheibe (7) dreht sich deshalb ebenfalls entgegen dem Uhrzeigersinn um eine halbe Umdrehung und zieht die Kurbelstange (8) nach unten.

Diese Bewegung wird gleichzeitig auf das andere Lager der Kurbelstange (8) am Kippgetriebe (17) übertragen und zieht somit das Laufrollenpaar (14) nach unten. Damit der Permanentmagnet (10) in der Ruheposition nicht dauernd mit der vollen Belastung der Laufrollen (14) über die Kurbelstange (8) und das Kurbelstangenlager (9) belastet ist, ist dieses Lager (9), wie oben beschrieben exmittig über der Mittelachse der Schaltwelle (2) angeordnet. Hiermit wird erreicht, dass ein Teil dieser Belastung durch die Schaltwelle (2) getragen wird.

Der beschriebene Vorgang entspricht einem vollständigen Abklappen eines Laufrollenpaares (14) nach unten.

Zwischenstellungen werden durch eine entsprechende Winkeldrehung der Schaltwelle (2) erreicht.

Aus der Sicht der Fig. 4a, also von rechts betrachtet, erfolgt die beschriebene Drehung der Kurbelscheibe (7) im Uhrzeigersinn.

Soll das Laufrollenpaar (14) wieder in die Ausgangsposition gebracht werden, wird der Elektromagnet (4) wieder mit Strom beaufschlagt, die Ankerplatte (5) wird angezogen, und die Kurbelscheibe (7), aus der Sicht der Fig. 4b, im Uhrzeigersinn zurückgedreht.

Für diejenigen Laufrollenpaare (14) die nicht von der Drehbewegung der Schaltwelle (2) berührt sein sollen, bei denen also der entsprechende Elektromagnet (4) mit Strom beaufschlagt bleibt, findet ein Abriss des Permanentmagneten (10) von seiner zugehörigen Ankerplatte (11) statt.

Dieser Vorgang setzt natürlich voraus, dass die Haltekraft des verwendeten Permanentmagneten (10) an der Ankerplatte (11) geringer ist, als die Haltekraft des Elektromagneten (4) an seiner Ankerplatte (5).

Durch die entsprechende Ansteuerung des Elektromagneten (4) eines bestimmten Rollenpaares (14) wird somit entschieden, ob dieses Rollenpaar durch die Drehung der Schaltwelle (2) erfasst wird, oder nicht.

In weiterer Ausgestaltung der Erfindung kann es vorgesehen sein, den Permanentmagneten (10) durch einen zusätzlichen, gesondert ansteuerbaren, Elektromagneten zu ersetzen oder diesen zu unterstützen. Hierdurch wird es möglich das Kräfteverhältnis der beiden Magneten (4) und (10) gezielt an veränderte Arbeitsbedingungen anzupassen, wie sie zum Beispiel durch Alterung oder erhöhten Anfall von Glasstaub entstehen. In diesem Fall sind zusätzliche Messgeräte zur Erfassung dieser zu beeinflussenden Kräfteverhältnisse von Vorteil.

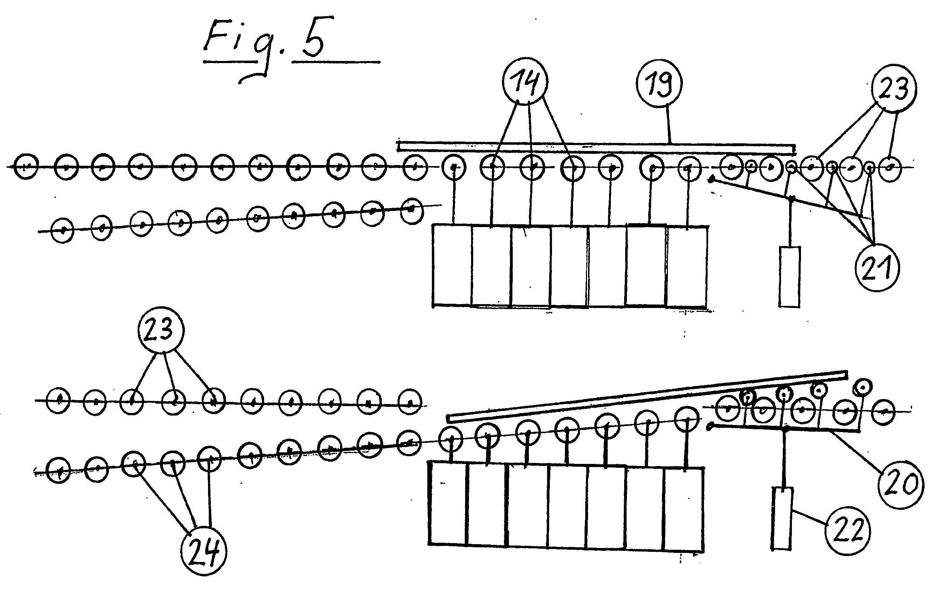

In der Fig. 5 wird der Vorgang des Ausleitens einer Glasplatte im Schnitt gezeigt. In der oberen Darstellung gleitet eine nicht auszuscheidende Glasplatte (19) von der rechten Seite her unbehelligt über die Laufrollen (14) der Vorrichtung zum Ausleiten zur weiteren Bearbeitung. Die Funktionseinheiten (16), hier sind sieben Stück beispielhaft eingezeichnet, sind in Ruheposition, desgleichen die Vorrichtung einer Kipp - Vorrichtung (20).

Bei der Ausleitung von kurzen und längeren Platten genügt es die der Breite der Glasplatte (19) entsprechenden Rollenpaare (14) einer Funktionseinheit (16) stark abzusenken und die entgegen der Laufrichtung der Glasplatte (19) befindlichen Rollenpaare entsprechend schwächer abzusenken, so dass sich im Endeffekt eine schiefe Ebene ergibt, auf der die auszuscheidende Glasplatte (19) abwärts in einen bereitstehenden Behälter gleiten kann.

Dies wird in der unteren Darstellung der Fig.5 gezeigt.

Handelt es sich jedoch darum längere Glasplatten (19) auszuleiten wird die Hilfe einer zusätzlichen Kipp - Vorrichtung (20) benötigt. Die Kipp - Vorrichtung (20) besteht im Wesentlichen aus einer Anzahl Kipprollen (21) die, kleiner als die regulären Laufrollen (23) der Hauptlinie, zwischen diesen hindurchtreten können um den hinteren Bereich einer solchen langen Glasplatte (19) zusätzlich anzuheben. Zu diesem Zweck sind in der Fig. 5 vier Kipprollen (21) dargestellt, die, schematisch gezeichnet, von der Gesamtkonstruktion der Kipp - Vorrichtung (20) zusammengefasst werden und als Funktionseinheit von dem Hebeantrieb (22) angehoben werden können.

Eine solche Kipp - Vorrichtung ermöglicht auch, dass für die Ausleitung langer Glasplatten (19) weniger Platz benötigt wird. Denn bei der Ausleitung langer und großer Glasplatten wäre es ohne eine Kipp - Vorrichtung (20) nötig eine viel größere Anzahl von Laufrollen (14) für das Ausleiten vorzusehen und in den zur Ausleitung notwendigen Steuerprozess einzubeziehen, da in einem solchen Fall eine Glasplatte in einem flacheren Winkel ausgeleitet werden müsste. Für die Ausleitung sehr langer Glasplatten können auch mehrere Kipp - Vorrichtungen (20) mit entsprechend stärkeren Hebeantrieben vorgesehen sein.

Befindet sich die auszuleitende Glasplatte (19) unterhalb der Laufrollen (23) der Hauptlinie wird sie von den Laufrollen (24) der Ausleitung weiter in einen bereitstehenden Behälter oder Bunker befördert und einer, für Abfallglas üblichen, Behandlung zugeführt.

Bei dem gesamten Ausleitungsprozess wird für die Steuerung der Funktionseinheiten sichergestellt, dass die Erfassung des Formats jeder Glasplatte (19), deren Qualitäsbewertung und die Überwachung der Positionierung über Laser oder andere Erfassungssysteme und Sensoren erfolgt.

Die interaktive Steuerung der jeweils verwendeten Laufrollen (14, 21, 23) in Verbindung mit der Erfassung des Formats und der Dicke jeder Glasplatte (19), deren Qualitäsbewertung und die Überwachung der Positionierung über Laser und / oder Sensoren erfordert ein spezielles Steuerungsprogramm.

### Bezugszeichenliste

- (1): Servoantrieb
- (2): Schaltwelle der Rollenabsenkung
- (3): Elektromagnethalter
- (4): Elektromagnet
- (5): Ankerplatte eines Elektromagneten
- (6): Kurbelscheibenlager
- (7): Kurbelscheibe
- (8): Kurbelstange
- (9): Kurbelstangenlager
- (10): Permanentmagnet
- (11): Ankerplatte eines Permanentmagneten
- (12): Halterung eines Permanentmagneten
- (13): Rollenantrieb
- (14): Laufrollen der Vorrichtung zum Ausleiten, Rollenpaar
- (15): Lager der Rollenantriebsachse
- (16): Gehäuse einer Rollen - Einheit, Funktionseinheit, Modul
- (17): Kippgetriebe für einen Rollenantrieb
- (18): Rollenantriebsachse
- (19): Glasplatte
- (20): Kipp - Vorrichtung
- (21): Kipprollen
- (22): Hebevorrichtung für die Kipp - Vorrichtung
- (23): Laufrollen der Hauptlinie
- (24): Laufrollen der Ausleitung

## Patentansprüche

1. Vorrichtung zum Ausleiten einer unbrauchbaren Glasplatte (19) während der fortlaufenden Fertigung von Glasplatten (19) unterschiedlicher Formate und Dicken, mit Einrichtungen in einer Anordnung, die die folgenden Merkmale aufweist:
a) die gefertigten Glasplatten (19) werden auf Fehlstellen untersucht und hinsichtlich ihrer Qualität über Laser und / oder andere Erfassungsmittel bewertet,
b) die so bewerteten Glasplatten (19) durchlaufen ein Feld, das aus elektrisch angetriebenen, kippbaren Rollenpaaren (14) besteht, die als selbständige Funktionseinheiten (16) gegliedert nebeneinander in Reihen angeordnet sind,
c) erreicht eine Glasplatte (19), deren Format eine bestimmte Größe nicht überschreitet und die als unbrauchbar bewertet wurde, dieses Feld, werden rechtzeitig diejenigen Rollenpaare (14) in der Form einer schiefen Ebene mittels einer Schaltwelle (2) nach unten geklappt, die, entsprechend dem Format der betreffenden Glasplatte (19), für eine Ausleitung benötigt werden, und es wird die Glasplatte (19) mittels Laufrollen (24) aus dem Fertigungsprozess ausgeleitet,
d) erreicht eine Glasplatte (19), deren Format eine bestimmte Größe überschreitet und die als unbrauchbar bewertet wurde, dieses Feld, werden rechtzeitig diejenigen Rollenpaare (14) in der Form einer schiefen Ebene nach unten geklappt, die, entsprechend dem Format der betreffenden Glasplatte (19), für eine Ausleitung benötigt werden, und die Glasplatte (19), beginnend am vorderen Teil, aus dem Fertigungsprozess ausgeleitet, wobei gleichzeitig zusätzlich eine KippVorrichtung (20) über einen Hebeantrieb (22) und Kipprollen (21), die zwischen den Laufrollen (23) der Hauptlinie hindurchtreten, den hinteren Teil dieser Glasplatte unterstützt,
e) nach dem Ausleiten eines unbrauchbaren Glasstücks werden die gekippten Rollenpaare (14), und evtl. die Kipprollen (21), jeweils mittels der Schaltwelle (2) wieder in ihre Ausgangsposition zurückgeklappt.

2. Vorrichtung nach Anspruch 1,
**dadurch gekennzeichnet,**
**dass** die Rollenpaare (14) als selbständige Funktionseinheiten (16) gegliedert nebeneinander in Reihen angeordnet sind, wobei diese Funktionseinheiten (16) wiederum parallel nebeneinander angeordnet sind, und
**dass** die Laufrollenpaare (14) jeder Funktionseinheit (16) selektiv über Schaltwellen (2) und zusätzliche Hubmittel (7 ,8) in unterschiedliche Höhenstellung gebracht werden können.

3. Vorrichtung nach einem der vorhergehenden Ansprüche,
**dadurch gekennzeichnet,**
**dass** die Erfassung des Formats jeder Glasplatte (19), deren Qualitätsbewertung und die Überwachung der Positionierung über Laser und / oder andere Erfassungsmittel und / oder Sensoren erfolgt.

4. Vorrichtung nach einem der vorhergehenden Ansprüche,
**dadurch gekennzeichnet,**
**dass** die kippbaren Rollenpaare (14) jeweils über eine Kurbelstange (8) und ein Kurbelstangenlager (9) mit einer, um einen Winkel verdrehbaren, Kurbelscheibe (7) verbunden sind, deren Winkelstellung von der Winkelstellung einer Schaltwelle (2) bestimmt wird.

5. Vorrichtung nach Anspruch 4,
**dadurch gekennzeichnet,**
**dass** die Rollenpaare (14) in der Ruheposition im Wesentlichen von einem fest gelagerten Elektromagneten (4) über eine an der Kurbelscheibe (7) befestigte Ankerplatte (5) gehalten werden und
**dass** in Arbeitsposition die Höhenstellung der Rollenpaare (14) von dem Drehwinkel der Schaltwelle (2) bestimmt wird, wobei dieser Drehwinkel bei ausgeschaltetem Elektromagneten (4) über einen an der Schaltwelle (2) befestigten Permanentmagneten (10) auf dessen, an der Kurbelscheibe (7) befestigten, Ankerplatte (11) und weiter über die Kurbelstange (8) auf die Rollenpaare (14) übertragen wird.

6. Vorrichtung nach Anspruch 5,
**dadurch gekennzeichnet,**
**dass** in der Ruheposition der Rollenpaare (14) das Kurbelstangenlager (9) außerhalb der Senkrechten, die von dem höchsten Punkt der Kurbelscheibe (7) und der Zentralachse der Schaltwelle (2) gebildet wird, liegt.

7. Vorrichtung nach einem der vorhergehenden Ansprüche 5 oder 6,
**dadurch gekennzeichnet,**
**dass** der Permanentmagnet (10), wahlweise zuschaltbar, von einem zusätzlichen Elektromagneten unterstützt wird.

8. Vorrichtung nach einem der vorhergehenden Ansprüche,
**dadurch gekennzeichnet,**
**dass** zur Ausleitung langer Glasplatten eine oder mehrere, entsprechend stärker dimensionierte, KippVorrichtungen (20) mit weiteren Kipprollen (21) in der Richtung entgegen dem Verlauf der Fertigungslinie eingesetzt werden.

9. Verfahren zum Ausleiten einer unbrauchbaren Glaspatte (19) während der fortlaufenden Fertigung von Glasplatten (19) unterschiedlicher Formate und Dicken, mit den folgenden Merkmalen:
a) die gefertigten Glasplatten (19) werden auf Fehlstellen untersucht und hinsichtlich ihrer Qualität bewertet, wobei die Erfassung des Formats jeder Glasplatte (19), deren Qualitätsbewertung und die Überwachung der Positionierung über Laser oder andere Erfassungssysteme und Sensoren erfolgt,
b) die so bewerteten Glasplatten (19) durchlaufen ein Feld, das aus elektrisch angetriebenen, kippbaren Rollenpaaren (14) besteht,
c) erreicht eine Glasplatte (19), deren Format eine bestimmte Größe nicht überschreitet und die als unbrauchbar bewertet wurde, dieses Feld, werden rechtzeitig diejenigen Rollenpaare (14) in der Form einer schiefen Ebene nach unten geklappt, die, entsprechend dem Format der betreffenden Glasplatte (19), für eine Ausleitung benötigt werden, und es wird die Glasplatte (19) aus dem Fertigungsprozess ausgeleitet,
d) erreicht eine Glasplatte (19), deren Format eine bestimmte Größe überschreitet und die als unbrauchbar bewertet wurde, dieses Feld, werden rechtzeitig diejenigen Rollenpaare (14) in der Form einer schiefen Ebene nach unten geklappt, die, entsprechend dem Format der betreffenden Glasplatte (19), für eine Ausleitung benötigt werden, und die Glasplatte (19), beginnend am vorderen Teil, aus dem Fertigungsprozess ausgeleitet, wobei gleichzeitig zusätzlich eine Kipp-Vorrichtung (20) über einen Hebeantrieb (22) und Kipprollen (21), die zwischen den Laufrollen (23) der Hauptlinie hindurchtreten, den hinteren Teil dieser Glasplatte unterstützt,
e) nach dem Ausleiten eines unbrauchbaren Glasstücks werden die gekippten Rollenpaare (14), und evtl. die Kipprollen (21), wieder in ihre Ausgangsposition zurückgeklappt.

10. Verfahren nach Anspruch 9,
**dadurch gekennzeichnet,**
**dass** die Rollenpaare (14) als selbständige Funktionseinheiten (16) gegliedert nebeneinander in Reihen angeordnet sind, wobei diese Funktionseinheiten (16) wiederum parallel nebeneinander angeordnet sind, und
**dass** die Laufrollenpaare (14) jeder Funktionseinheit (16) selektiv über Schaltwellen (2) und zusätzliche Hubmittel (7, 8) in unterschiedliche Höhenstellung gebracht werden können.

11. Verfahren nach einem der vorhergehenden Ansprüche 9 oder 10,
**dadurch gekennzeichnet,**
**dass** die Erfassung des Formats jeder Glasplatte (19), deren Qualitätsbewertung und die Überwachung der Positionierung über Laser und / oder andere Erfassungsmittel und / oder Sensoren erfolgt.

12. Verfahren nach einem der vorhergehenden Ansprüche 9 bis 11,
**dadurch gekennzeichnet,**
**dass** die kippbaren Rollenpaare (14) jeweils über eine Kurbelstange (8) und ein Kurbelstangenlager (9) mit einer, um einen Winkel verdrehbaren, Kurbelscheibe (7) verbunden sind, deren Winkelstellung von der Winkelstellung einer Schaltwelle bestimmt wird.

13. Verfahren nach Anspruch 12,
**dadurch gekennzeichnet,**
**dass** die Rollenpaare (14) in der Ruheposition von einem fest gelagerten Elektromagneten (4) über eine an der Kurbelscheibe (7) befestigte Ankerplatte (5) gehalten werden und
**dass** in Arbeitsposition die Höhenstellung der Rollenpaare (14) von dem Drehwinkel der Schaltwelle (2) bestimmt wird, wobei dieser Drehwinkel bei ausgeschaltetem Elektromagneten (4) über einen an der Schaltwelle (2) befestigten Permanentmagneten (10) auf dessen, an der Kurbelscheibe (7) befestigten, Ankerplatte (11) und weiter über die Kurbelstange (8) auf die Rollenpaare (14) übertragen wird.

14. Verfahren nach Anspruch 13,
**dadurch gekennzeichnet,**
**dass** in der Ruheposition der Rollenpaare (14) das Kurbelstangenlager (9) außerhalb der Senkrechten, die von dem höchsten Punkt der Kurbelscheibe (7) und der Zentralachse der Schaltwelle (2) gebildet wird, liegt.

15. Verfahren nach einem der vorhergehenden Ansprüche 13 oder 14,
**dadurch gekennzeichnet,**
**dass** der Permanentmagnet (10), wahlweise zuschaltbar, von einem zusätzlichen Elektromagneten unterstützt wird.

16. Verfahren nach einem der vorhergehenden Ansprüche 9 bis 15,
**dadurch gekennzeichnet,**
**dass** zur Ausleitung langer Glasplatten eine oder mehrere, entsprechend stärker dimensionierte, Kipp-Vorrichtungen (20) mit weiteren Kipprollen (21) in der Richtung entgegen dem Verlauf der Fertigungslinie eingesetzt werden.

17. Computerprogramm mit einem Programmcode zur Durchführung der Verfahrensschritte nach einem der Ansprüche 9 bis 16, wenn das Programm in einem Computer ausgeführt wird.

18. Maschinenlesbarer Träger mit dem Programmcode eines Computerprogramms zur Durchführung des Verfahrens nach einem der Ansprüche 9 bis 16, wenn das Programm in einem Computer ausgeführt wird.

## Claims

1. Apparatus for diverting an unusable glass plate (19) during the continuous production of glass plates (19) of different formats and thicknesses, having devices in an arrangement which has the following features:
a) the finished glass plates (19) are examined for faults and their quality is assessed by lasers and/or other detection means,
b) the glass plates (19) thus assessed pass through an array which comprises electrically driven, tiltable roller pairs (14) which, organised as self-contained functional units (16), are arranged beside one another in rows,
c) when a glass plate (19) of which the format does not exceed a specific size and which has been assessed as unusable reaches this array, those roller pairs (14) which are needed for a diversion according to the format of the relevant glass plate (19) are folded down in good time in the form of an inclined plane by means of a control shaft (2), and the glass plate (19) is diverted out of the production process by means of running rollers (24),
d) when a glass plate (19) of which the format exceeds a specific size and which has been assessed as unusable reaches this array, those roller pairs (14) which are needed for a diversion according to the format of the relevant glass plate (19) are folded down in good time in the form of an inclined plane, and the glass plate (19) is diverted out of the production process, beginning at the leading part, at the same time a tilting apparatus (20) additionally supporting the trailing part of this glass plate via a lever drive (22) and tilting rollers (21) which pass between the running rollers (23) of the main line,
e) following the diversion of an unusable piece of glass, the tilted roller pairs (14) and, if appropriate, the tilting rollers (21) are each folded back into their initial position again by means of the control shaft (2).

2. Apparatus according to Claim 1,
**characterized in that**
the roller pairs (14) organised as self-contained functional units (16) are arranged beside one another in rows, these functional units (16) in turn being arranged in parallel beside one another, and
**in that** the running roller pairs (14) of each functional unit (16) can be brought selectively into different vertical positions via control shafts (2) and additional lifting means (7, 8).

3. Apparatus according to one of the preceding claims,
**characterized in that**
the detection of the format of each glass plate (19), the assessment of its quality and the monitoring of the positioning are carried out via lasers and/or other detection means and/or sensors.

4. Apparatus according to one of the preceding claims,
**characterized in that**
the tiltable roller pairs (14) are each connected via a connecting rod (8) and a connecting rod bearing (9) to a crank disc (7) which can be rotated through an angle and the angular position of which is determined by the angular position of a control shaft (2).

5. Apparatus according to Claim 4,
**characterized in that**
in the rest position, the roller pairs (14) are substantially held by a fixedly mounted electromagnet (4) via an armature plate (5) fixed to the crank disc (7), and
**in that** in the working position, the vertical position of the roller pairs (14) is determined by the rotational angle of the control shaft (2), wherein, when the electromagnet (4) is switched off, this rotational angle is transferred via a permanent magnet (10) fixed to the control shaft (2) to its armature plate (11) fixed to the crank disc (7) and further via the connecting rod (8) to the roller pairs (14).

6. Apparatus according to Claim 5,
**characterized in that**
in the rest position of the roller pairs (14), the connecting rod bearing (9) is located outside the vertical which is formed by the highest point of the crank disc (7) and the central axis of the control shaft (2).

7. Apparatus according to one of the preceding Claims 5 or 6,
**characterized in that**
the permanent magnet (10) is assisted by an additional electromagnet, which can optionally be connected thereto.

8. Apparatus according to one of the preceding claims,
**characterized in that**
in order to divert long glass plates, use is made of one or more appropriately more strongly dimensioned tilting apparatuses (20) having further tilting rollers (21) in the direction counter to the course of the production line.

9. Method for diverting an unusable glass plate (19) during the continuous production of glass plates (19) of different formats and thicknesses, having the following features:
a) the finished glass plates (19) are examined for faults and their quality is assessed, wherein the detection of the format of each glass plate (19), the assessment of its quality and the monitoring of the positioning are carried out via lasers or other detection systems and sensors,
b) the glass plates (19) thus assessed pass through an array which comprises electrically driven, tiltable roller pairs (14),
c) when a glass plate (19) of which the format does not exceed a specific size and which has been assessed as unusable reaches this array, those roller pairs (14) which are needed for a diversion according to the format of the relevant glass plate (19) are folded down in good time in the form of an inclined plane, and the glass plate (19) is diverted out of the production process,
d) when a glass plate (19) of which the format exceeds a specific size and which has been assessed as unusable reaches this array, those roller pairs (14) which are needed for a diversion according to the format of the relevant glass plate (19) are folded down in good time in the form of an inclined plane, and the glass plate is diverted out of the production process, beginning at the leading part, at the same time a tilting apparatus (20) additionally supporting the trailing part of this glass plate via a lever drive (22) and tilting rollers (21) which pass between the running rollers (23) of the main line,
e) following the diversion of an unusable piece of glass, the tilted roller pairs (14) and, if appropriate, the tilting rollers (21) are each folded back into their initial position again.

10. Method according to Claim 9,
**characterized in that**
the roller pairs (14) organised as self-contained functional units (16) are arranged beside one another in rows, these functional units (16) in turn being arranged in parallel beside one another, and
**in that** the running roller pairs (14) of each functional unit (16) can be brought selectively into different vertical positions via control shafts (2) and additional lifting means (7, 8).

11. Method according to one of the preceding Claims 9 or 10,
**characterized in that**
the detection of the format of each glass plate (19), the assessment of its quality and the monitoring of the positioning are carried out via lasers and/or other detection means and/or sensors.

12. Method according to one of the preceding Claims 9 to 11,
**characterized in that**
the tiltable roller pairs (14) are each connected via a connecting rod (8) and a connecting rod bearing (9) to a crank disc (7) which can be rotated through an angle and the angular position of which is determined by the angular position of a control shaft.

13. Method according to Claim 12,
**characterized in that**
in the rest position, the roller pairs (14) are held by a fixedly mounted electromagnet (4) via an armature plate (5) fixed to the crank disc (7), and
**in that** in the working position, the vertical position of the roller pairs (14) is determined by the rotational angle of the control shaft (2), wherein, when the electromagnet (4) is switched off, this rotational angle is transferred via a permanent magnet (10) fixed to the control shaft (2) to its armature plate (11) fixed to the crank disc (7) and further via the connecting rod (8) to the roller pairs (14).

14. Apparatus according to Claim 13,
**characterized in that**
in the rest position of the roller pairs (14), the connecting rod bearing (9) is located outside the vertical which is formed by the highest point of the crank disc (7) and the central axis of the control shaft (2).

15. Method according to one of the preceding Claims 13 or 14,
**characterized in that**
the permanent magnet (10) is assisted by an additional electromagnet, which can optionally be connected thereto.

16. Method according to one of the preceding Claims 9 to 15,
**characterized in that**
in order to divert long glass plates, use is made of one or more appropriately more strongly dimensioned tilting apparatuses (20) having further tilting rollers (21) in the direction counter to the course of the production line.

17. Computer program having program code for carrying out the method steps according to one of Claims 9 to 16 when the program is executed in a computer.

18. Machine-readable carrier having the program code of a computer program for carrying out the method according to one of Claims 9 to 16 when the program is executed in a computer.

## Revendications

1. Dispositif destiné à retirer par déviation une lame de verre inutilisable (19) pendant la fabrication consécutive de lames de verre (19) ayant des formats et des épaisseurs différentes, comportant des dispositifs présentant un agencement dont les caractéristiques sont les suivantes :
a) les lames de verre fabriquées (19) sont soumises à un examen des défauts et sont évaluées en ce qui concerne leur qualité par laser et/ou d'autres moyens de détection,
b) les lames de verre ainsi évaluées (19) passent à travers un champ qui est constitué de paires de rouleaux basculantes entraînées électriquement (14), qui sont disposées en série côte à côte de manière articulée sous la forme d'unités fonctionnelles autonomes (16),
c) lorsqu'une lame de verre (19), dont le format ne dépasse pas une taille déterminée et qui a été évaluée comme étant inutilisable, atteint ledit champ, on rabat vers le bas en temps utile sous la forme d'un plan incliné, au moyen d'un arbre de commande (2), les paires de rouleaux (14) qui sont nécessaires, d'une manière qui correspond au format de la lame de verre concernée (19), pour un retrait par déviation, et on retire par déviation la lame de verre (19) du processus de fabrication au moyen de galets de roulement (24),
d) lorsqu'une lame de verre (19), dont le format dépasse une taille déterminée et qui a été évaluée comme étant inutilisable, atteint ledit champ, on rabat vers le bas en temps utile sous la forme d'un plan incliné les paires de rouleaux (14) qui sont nécessaires, d'une manière qui correspond au format de la lame de verre concernée (19), pour un retrait par déviation, et on retire par déviation la lame de verre (19) du processus de fabrication en commençant par la partie avant, dans lequel un dispositif de basculement (20) supporte en outre simultanément la partie arrière de ladite lame de verre par l'intermédiaire d'un mécanisme de levage (22) et de rouleaux de basculement (21) qui pénètrent entre les galets de roulement (23) de la ligne principale,
e) après le retrait par déviation d'une pièce de verre inutilisable, les paires de rouleaux basculées (14) et le cas échéant, les rouleaux de basculement (21), sont respectivement ramenés à leur position de départ au moyen de l'arbre de commande (2).

2. Dispositif selon la revendication 1, **caractérisé en ce que** les paires de rouleaux (14) sont disposées en série côte à côte de manière articulée sous la forme d'unités fonctionnelles autonomes (16), dans lequel lesdites unités fonctionnelles (16) sont disposées tour à tour parallèlement les unes aux autres, et
**en ce que** les paires de galets de roulement (14) de chaque unité fonctionnelle (16) peuvent être sélectivement amenées à une position en hauteur différente par l'intermédiaire d'arbres de commande (2) et de moyens de levage supplémentaires (7,8).

3. Dispositif selon l'une quelconque des revendications précédentes, **caractérisé en ce que** la détection du format de chaque lame de verre (19), l'évaluation de sa qualité et la surveillance du positionnement s'effectuent par laser et/ou d'autres moyens de détection et/ou d'autres capteurs.

4. Dispositif selon l'une quelconque des revendications précédentes, **caractérisé en ce que** les paires de rouleaux basculantes (14) sont respectivement reliées par l'intermédiaire d'une tige de vilebrequin (8) et d'un support de vilebrequin (9) comportant un bras de vilebrequin (7) pouvant tourner d'un certain angle, dont la position angulaire est déterminée par la position angulaire d'un arbre de commande (2).

5. Dispositif selon la revendication 4, **caractérisé en ce que** les paires de rouleaux (14) sont maintenues sensiblement en position de repos par un électroaimant fixe (4) par l'intermédiaire d'une plaque d'ancrage (5) fixée au bras de vilebrequin (7) et
**en ce que**, en position de fonctionnement, la position en hauteur des paires de rouleaux (14) est déterminée par l'angle de rotation de l'arbre de commande (2), dans lequel ledit angle de rotation, lorsque l'électroaimant (4) est désactivé, est transmis par l'intermédiaire d'un aimant permanent (10) fixé à l'arbre de commande (2) à sa plaque d'ancrage (11) fixée au bras de vilebrequin (7) et de là, par l'intermédiaire de la tige de vilebrequin (8), aux paires de rouleaux (14).

6. Dispositif selon la revendication 5, **caractérisé en ce que**, à la position de repos des paires de rouleaux (14), le support de vilebrequin (9) se situe en dehors de la verticale qui est formée par le point le plus haut du bras de vilebrequin (7) et de l'axe central de l'arbre de commande (2).

7. Dispositif selon l'une quelconque des revendications 5 ou 6 précédentes, **caractérisé en ce que** l'aimant permanent (10) est supporté de manière à pouvoir être activé sélectivement par un électroaimant supplémentaire.

8. Dispositif selon l'une quelconque des revendications précédentes, **caractérisé en ce que**, pour le retrait par déviation de lames de verre plus longues, un ou plusieurs dispositifs de basculement (20) de dimensions par conséquent plus importantes et comportant d'autres rouleaux de basculement (21) sont utilisés dans la direction opposée au déplacement de la ligne de fabrication.

9. Procédé destiné à retirer par déviation une lame de verre inutilisable (19) pendant la fabrication consécutive de lames de verre (19) ayant des formats et des épaisseurs différentes, présentant les caractéristiques suivantes :
a) les lames de verre fabriquées (19) sont soumises à un examen des défauts et sont évaluées en ce qui concerne leur qualité, dans lequel la détection du format de chaque lame de verre (19), l'évaluation de sa qualité et la surveillance du positionnement s'effectuent par laser ou par d'autres systèmes de détection et d'autres capteurs,
b) les lames de verre ainsi évaluées (19) passent à travers un champ qui est constitué de paires de rouleaux basculantes entraînées électriquement (14),
c) lorsqu'une lame de verre (19) dont le format ne dépasse pas une taille déterminée et qui a été évaluée comme étant inutilisable, atteint ledit champ, on rabat vers le bas en temps utile sous la forme d'un plan incliné les paires de rouleaux (14) qui sont nécessaires pour un retrait par déviation, d'une manière qui correspond au format de la lame de verre concernée (19), et on retire par déviation la lame de verre (19) du processus de fabrication,
d) lorsqu'une lame de verre (19) dont le format dépasse une taille déterminée et qui a été évaluée comme étant inutilisable, atteint ledit champ, on rabat vers le bas en temps utile sous la forme d'un plan incliné les paires de rouleaux (14) qui sont nécessaires, d'une manière qui correspond au format de la lame de verre concernée (19), pour un retrait par déviation, et on retire par déviation la lame de verre (19) du processus de fabrication en commençant par la partie avant, dans lequel un dispositif de basculement (20) supporte en outre simultanément la partie arrière de ladite lame de verre par l'intermédiaire d'un mécanisme de levage (22) et de rouleaux de basculement (21) qui pénètrent entre les galets de roulement (23) de la ligne principale,
e) après le retrait par déviation d'une pièce de verre inutilisable, les paires de rouleaux basculées (14) et le cas échéant, les rouleaux de basculement (21), sont ramenés à leur position de départ.

10. Procédé selon la revendication 9, **caractérisé en ce que** les paires de rouleaux (14) sont disposées en série côte à côte de manière articulée sous la forme d'unités fonctionnelles autonomes (16), dans lequel lesdites unités fonctionnelles (16) sont disposées tour à tour parallèlement les unes aux autres, et
**en ce que** les paires de galets de roulement (14) de chaque unité fonctionnelle (16) peuvent être sélectivement amenées à une position en hauteur différente par l'intermédiaire d'arbres de commande (2) et de moyens de levage supplémentaires (7, 8).

11. Procédé selon l'une quelconque des revendications 9 ou 10 précédentes, **caractérisé en ce que** la détection du format de chaque lame de verre (19), l'évaluation de sa qualité et la surveillance du positionnement s'effectuent par laser et/ou d'autres moyens de détection et/ou d'autres capteurs.

12. Procédé selon l'une quelconque des revendications précédentes 9 à 11, **caractérisé en ce que** les paires de rouleaux basculantes (14) sont respectivement reliées par l'intermédiaire d'une tige de vilebrequin (8) et d'un support de vilebrequin (9) comportant un bras de vilebrequin (7) pouvant tourner d'un certain angle, dont la position angulaire est déterminée par la position angulaire d'un arbre de commande.

13. Procédé selon la revendication 12, **caractérisé en ce que** les paires de rouleaux (14) sont maintenues en position de repos par un électroaimant fixe (4) par l'intermédiaire d'une plaque d'ancrage (5) fixée au bras de vilebrequin (7) et
**en ce que**, en position de fonctionnement, la position en hauteur des paires de rouleaux (14) est déterminée par l'angle de rotation de l'arbre de commande (2), dans lequel ledit angle de rotation, lorsque l'électroaimant (4) est désactivé, est transmis par l'intermédiaire d'un aimant permanent (10) fixé à l'arbre de commande (2) à sa plaque d'ancrage (11) fixée au bras de vilebrequin (7) et de là, par l'intermédiaire de la tige de vilebrequin (8), aux paires de rouleaux (14).

14. Procédé selon la revendication 13, **caractérisé en ce que**, à la position de repos des paires de rouleaux (14), le support de vilebrequin (9) se situe en dehors de la verticale qui est formée par le point le plus haut du bras de vilebrequin (7) et de l'axe central de l'arbre de commande (2).

15. Procédé selon l'une quelconque des revendications 13 ou 14 précédentes, **caractérisé en ce que** l'aimant permanent (10) est supporté de manière à pouvoir être activé sélectivement par un électroaimant supplémentaire.

16. Procédé selon l'une quelconque des revendications précédentes 9 à 15, **caractérisé en ce que**, pour le retrait par déviation de lames de verre plus longues, un ou plusieurs dispositifs de basculement (20) de dimensions par conséquent plus importantes et comportant d'autres rouleaux de basculement (21) sont utilisés dans la direction opposée au déplacement de la ligne de fabrication.

17. Programme informatique comportant un code de programme destiné à mettre en oeuvre les étapes du procédé selon l'une quelconque des revendications 9 à 16, lorsque le programme est exécuté sur un ordinateur.

18. Support lisible par machine comportant un code de programme d'un programme informatique destiné à mettre en oeuvre le procédé selon l'une quelconque des revendications 9 à 16, lorsque le programme est exécuté sur un ordinateur.
